(19) Europäisches Patentamt / European Patent Office / Office européen des brevets

(11) **EP 1 830 176 A1**

(12) **EUROPEAN PATENT APPLICATION**

(43) Date of publication:
05.09.2007 Bulletin 2007/36

(51) Int Cl.:
*G01N 21/85* (2006.01)  *G01B 11/24* (2006.01)
*G01B 11/04* (2006.01)  *B07C 5/342* (2006.01)

(21) Application number: 06110604.3

(22) Date of filing: 02.03.2006

(84) Designated Contracting States:
AT BE BG CH CY CZ DE DK EE ES FI FR GB GR HU IE IS IT LI LT LU LV MC NL PL PT RO SE SI SK TR
Designated Extension States:
AL BA HR MK YU

(71) Applicant: FOSS Analytical AB
263 21 Höganäs (SE)

(72) Inventor: **Jonasson Bjäräng, Tomas**
**266 92, Munka Ljungby (SE)**

(74) Representative: **Grönlund, Tim Linus Wilhelm**
**Awapatent AB**
**Box 1066**
**251 10 Helsingborg (SE)**

(54) **Device and method for optical measurement of small particles such as grains from cereals and like crops**

(57) A device (100) for optical measuring of grains for analysis of the quality of said grains, comprises a feeder (102), which is arranged to feed at least one grain (101), a light source (105), which is arranged to illuminate said grain along a line (106) transverse to a direction of movement (107) of said grain, a detector (108), which is arranged to detect reflection (109) from the surfaces of said grain along said illuminated line (106), and an analyzer (111), which is arranged to analyze said detected reflection in order to determine a height profile (112) of the grain along said illuminated line and to determine a three-dimensional surface (114) of said grain based on a plurality of determined height profiles (112) as said grain passes the light source and detector, wherein said analyzer is arranged to determine a quality of said grain based on said determined three-dimensional surface.

Fig 1

**Description**

Technical field

This invention relates to a device and a method for optical measuring of small particles, such as grain from crops, for analysis of the quality of the particles.

Background of the invention

Inspection of different kinds of cereals and other crops is today made all over the world to determine the quality of the cereals in commercial transactions and handling. The inspection aims at examining a selected representative sample from a large consignment and determining the presence of non-desitable grains and particles. The non-approved grains and particles are classified and the quantity of each class is determined. Owing to the distribution of the various grains, the sample and, thus, the consignment will be given a grading which is a decisive factor in connection with payment and handling of the consignment.

Today most cereal inspections are carried out in automated processes. Presently, use is often made of certain optical measuring methods for analysis of the quality of the grains. Such a measuring method may be based on a grain being illuminated, whereupon a two-dimensional image of the grain is obtained for analysis of the quality of the grain. The analysis may e.g. comprise determining the colour of the grain and/or size and shape of the grain. Each grain may then be classified and different qualities may be segregated. One such method for grading and classifying grain is described in US2005/0074146.

Thus, non-approved grains and other particles:may be sorted out. Further, a measure of the relative occurrence of non-approved grains and undesired particles may be used for setting the price of the consignment. Traditionally, weight has been a factor for comparison between approved and non-approved grains and particles, that is the different qualities are sorted out and weighed. Alternatively, the relative volume of the approved and non-approved grains and particles may be used for setting the price of the consignment.

It is desired to enable improved identification of different grades of grains and also to provide accurate measures of the relative volumes of different grades.

Summary of the invention

An object of the present invention is to provide a method for optical measuring of small particles, such as grain from crops, for analysis of the quality of said particles.

It is a particular objective to provide a consistent, rapid and accurate analysis of grain for various visual quality factors, especially a volume based quality factor. It is furthermore an object of the present invention to reduce the subjectivity inherent in conventional visual grain quality assessment, and consequently, to aid in making better decisions in the processes of grain analysis.

A particular advantage of the present invention is to provide improved accuracy in volume measurements and/or identification of defects in a sample.

A further advantage of the present invention is the detection of defects of grains related to the geometrical aspects such as the surface structure.

The above object, advantage and feature together with numerous other objects, advantages and features, which will become evident from below detailed description, are obtained according to a first aspect of the present invention by a device for optical measuring of small particles, such as grain from crops, for analysis of the quality of the particles, comprising

- a feeder, which is arranged to feed a particle sample, which, comprises at least one particle, to a place for optical measurement,
- an optical system, which is adapted to illuminate the particle sample at the place for optical measurement and to detect illumination after its interaction with said particle sample, and
- an analyzer, which is adapted to receive said detected illumination and to process the same to determine a quality of said particle sample, wherein the analyzer is adapted to process the detected illumination to generate three-dimensional image information of individual particles of the particle sample and to process said three-dimensional image information to determine a quality of said particle sample.

By means of the invention, there is provided a device which enables three-dimensional information of particles to be obtained. Further, the device uses the three-dimensional information in order to assess quality of particles. The three-dimensional information is particularly suited for e.g. detecting defects, such as irregular shapes or cracks, in particles, and determining the volume of the particle, which may be used for classifying particles or determining a volume percentage of different grades in a particle sample.

By analyzing the three-dimensional image information for determining the quality of the particle sample, the analysis can occur in direct connection to the detection of the illumination that has interacted with the particle sample, and a sample result can be obtained from the device in a quick and direct manner.

The analyzer may be adapted to process the detected illumination to generate three-dimensional surface information as said three-dimensional image information.

The generation of three-dimensional surface information provides the analyzer with structural information of the shape of the particle, which is suitably used for determining the quality of a particle sample.

The three-dimensional image information is particularly suitable for use in connection with information from a two-dimensional image of the particle. Thus, the analyzer may be arranged to process the three-dimensional image information in combination with a two-dimensional image in order to improve assessment of the quality of a particle.

According to an embodiment, the optical system comprises a light source, which is arranged to illuminate the particle sample along a line transverse to a direction of movement of the particle sample; and a detector, which is arranged to detect illumination reflected from surfaces of the sample along the line. Further, the analyzer may be adapted to analyze the detected reflected illumination to determine a height profile of at least one particle of the particle sample along the line and to generate the three-dimensional surface information based on a plurality of determined height profiles as the particle sample is transported in the direction of movement.

By means of this embodiment, the device enables accurate determination of a three-dimensional surface of at Least one particle. Thus, the three-dimensional surface may be used for determining features to be used in assessing the quality of particles and, especially, the three-dimensional surface describes the shape or form of the particle, which is advantageously used for assessing the quality. These determined features of the particle may be used solely or in combination with features from other measuring methods in order to define the quality of the particle.

In other words, by using a detector in combination with a light source to measure how the height of individual grains in a sample varies, detailed surface structure information is obtained. The information can be used to determine the volume of the grain. The information can also be used for classification and/or to detect defects of grain. Hence, the device discloses a tool to more effectively and precisely assess quality in agricultural commodities.

According to one embodiment, the analyzer is adapted to determine a quality that comprises a volume measurement for at least one particle of the particle sample. By means of the determined three-dimensional surface, a very accurate volume, of each particle may be determined. An individual particle may be assigned to a specific quality based on its volume. Also, the particle sample or an entire consignment may be assigned to a specific quality, wherein the volume of e.g. approved particles are related to the volume of non-approved particles.

According to another embodiment, the analyzer is adapted to determine a quality that comprises classification and/or identification of a defect in the particle and/or the sample. The determined three-dimensional surface may be used to identify abnormal or undesired shapes of the particle and, thereby identify defects related to such undesired shapes. Also, the determined three-dimensional surface may be used to classify a particle as belonging to a specific grade.

The defect may comprise a cracked, split, or irregularly shaped grain, weather damage, skin remainders, sprouted kernels, mould and/or fungi diseases, rougher surface or any combinations thereof.

The detector may comprise an image-acquiring means which is arranged at a non-perpendicular angle to a plane on which the sample is fed. This allows the image-acquiring means to view different heights in relation to the plane in different rows of the image. Further, the analyzer may be adapted to determine the height profile by comparing distances between the surface of the particles with the plane.

However, the optical measurement can be any kind of light-sensitive measurement. The detector need not record an image, but can record the light intensity in certain points or some kind of averaging among a plurality of properties, such as directly reflected light compared with diffusely reflected light. An image-acquiring means could be, for instance, any type of digital camera, such as a CMOS camera.

The light source may comprise a laser light source. Hereby, a significant contrast difference between the illuminated section and the remainder of the sample is achieved. Thus, precise height measurements of the sample are enabled with high resolution. Preferably, the laser light source is arranged to emit light in a plane. Thus, the height profile may be simultaneously determined over a cross-section of the particle sample and thus for a large number of particles being arranged side by side.

The detector may comprise two or more units, which are arranged to detect reflected light from at least partially different regions of the sample. This is especially advantageous when the detector is arranged at a non-perpendicular angle to a plane on which the sample is fed. In such case, parts of a particle may be obscured to a detector and having two or more units would aid in obtaining information of the height profile from all parts of the particle samples.

The feeder may comprise a conveyor. The feeder need not transport the grain sample during continuous, straight movement, but in most cases it is advantageous since a conventional conveyor belt can be used for this purpose. The feeder may also or alternatively comprise an inclined surface such that the sample is fed to the place for optical measurement under the influence of the gravity field.

According to an embodiment, the device further comprises a detector for obtaining a two-dimensional plan view of the particle sample, wherein the analyzer is adapted to process the two-dimensional plan view and the three-dimensional image information to determine a quality of said particle sample. Thus, the device provides a possibility of combining the three-dimensional image information with a two-dimensional plan view of a particle sample for improving the assessment of the quality of a particle sample.

The device may be arranged to determine a quality to be used as a basis for pricing of crops. The pricing of crops may typically be determined by the relative volume of approved grains or specific grades in the sample.

The device may also or alternatively be arranged to select particles of similar outer measures. By means of the three-dimensional surface, the outer measures of the particles are determined. These measures may thus be used for sorting particles of similar outer measures, which may be useful for later handling, of the particles.

The above objects, advantages and features together with numerous other objects, advantages and features, which will become evident from below detailed description, are obtained according to a second aspect of the present invention by a method for optical measuring of small particles, such as grains from crops, for analysis of the quality of the particles, comprising the steps of:

- feeding a particle sample, which comprises at least one particle, to a place for optical measurement,
- illuminating the particle sample at the place for optical measurement,
- detecting illumination after its interaction with the particle sample,
- analyzing the detected illumination to determine a quality of the particle sample, wherein the step of analyzing comprises
- processing the detected illumination to generate three-dimensional image information of individual particles of the particle sample, and
- processing the three-dimensional image information to determine a quality of the particle sample.

The method determines three-dimensional information of particles in order to assess the quality of the particles. This particularly enables detection of irregularly shaped-particles or determination of the volume of particles.

The step of processing the detected illumination may generate three-dimensional surface information as the three-dimensional image information. This provides specific structural information of the shape of the particle to be used in accurately distinguishing qualities by their shape.

According to one embodiment, the step of illuminating comprises illuminating the particle sample along a line-transverse to a-direction of movement of the particle sample; the step of detecting comprises detecting illumination reflected from surfaces, of the particle sample along the line; and the step of analyzing comprises analyzing the detected reflected illumination to determine a height profile of at least one particle of the particle sample along the line and to generate the three-dimensional surface information based on a plurality of determined height profiles as the particle sample is transported in the direction of movement.

According to this embodiment, the three-dimensional surface of a particle may be accurately determined and thereby be used in assessing the quality of a particle.

Brief description of the drawings

The above, as well as additional objects, features and advantages of the present invention, will be better understood through the following illustrative and nonlimiting detailed description of preferred embodiments of the present invention, with reference to the appended drawing, wherein:

Fig. 1 shows an arrangement for optical analysis according to one embodiment of the invention;
Fig. 2 illustrates determination of a height profile of a sample using the arrangement of Fig. 1;
Fig. 3 shows a cross-sestional height profile of a sample according to the invention;
Fig . 4 shows a three-dimensional view of a sample according to the invention;
Fig. 5 illustrates the difference of a cross-sectional height profile of a halved particle and a normal particle;
Fig. 6 is a schematic view of arrangement for obtaining combined three-dimensional and two-dimensional information of a sample;
Figs. 7-9 illustrate sample data that are particularly suitable to be analyzed using the arrangement of Fig. 6;
Fig. 10 shows a schematic diagram of the steps in a method according to one embodiment of the invention;
Fig. 11 shows a calibration set-up according to one embodiment of the invention.

Detailed description of preferred embodiments

In the following description of the various embodiments, reference is made to the accompanying figures which form a part hereof, and in which are shown by way of illustration a first embodiment of how the invention may be practiced. It is to be understood that other embodiments may be utilized, and structural and functional modifications may be made without departing from the scope of the present invention.

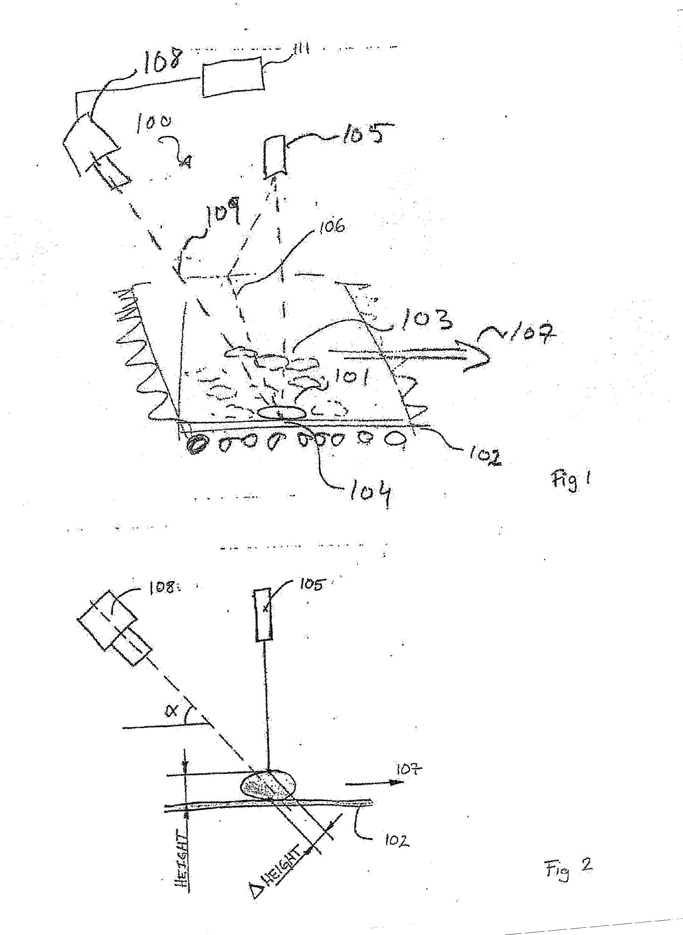

Fig. 1 shows a device for optical measuring of small particles 101 according to a first embodiment of the present invention designated in entirety by reference numeral 100. The device is especially suited for optical measuring of grains from crops and the like. Thus, the device may e.g. be used for optical measuring on any type of wheat, barley, or other corns, lupins, beans, pulses, soybeans, and rice.

The device comprises a feeder 102, such as a conveyor belt, arranged to feed a particle sample 103, comprising at least one grain 101, to a place 104 for optical measurement. The feeder 102 may be arranged to feed grains 101 in an arranged manner. Preferably, the grains 101 are fed in parallel rows with a small interval between, so that adjacent grains 101 may easily be separated in the optical measurement. The feeder 102 may be arranged in connection with a hopper (not shown) that places the grains 101 in a desired manner on the feeder 102. The direction of movement of the feeder 102 is indicated by the arrow 107.

The device further comprises a light source 105 arranged to illuminate the particle sample along a line 106 transverse to the direction of movement of the particle sample when it passes the place for optical measurement. The light source 105 iS preferably a laser that emits light in a plane. The laser light source 105 may be a low power laser requiring minimum safety measures to be taken. The laser light source 105 provides a very well-defined illuminated line and gives a distinct reflection that may be recorded and easily converted to a determination of the exact position, where a reflection occurred on the grain.

Furthermore, the device comprises a detector 108 arranged to detect reflection, indicated by the dashed line 109, from the surface of the particle sample along the illuminated line 106. The detector 108 may be an image-acquiring means such as a digital camera. The camera 108 is arranged at an angle $\alpha$ in relation to the feeder 102, as illustrated in Fig. 2. Reflection of the light at different heights over the feeder 102 will thus be imaged in different rows of a camera image.

The device 100 further comprises an analyzer 111, which is arranged to analyze the detected reflection 109 in order to determine a height profile 212 as illustrated in Fig. 3. The height of the grain may thus be calculated as

$$Height = \frac{\Delta height}{\cos(\alpha) \cdot res} \qquad (1)$$

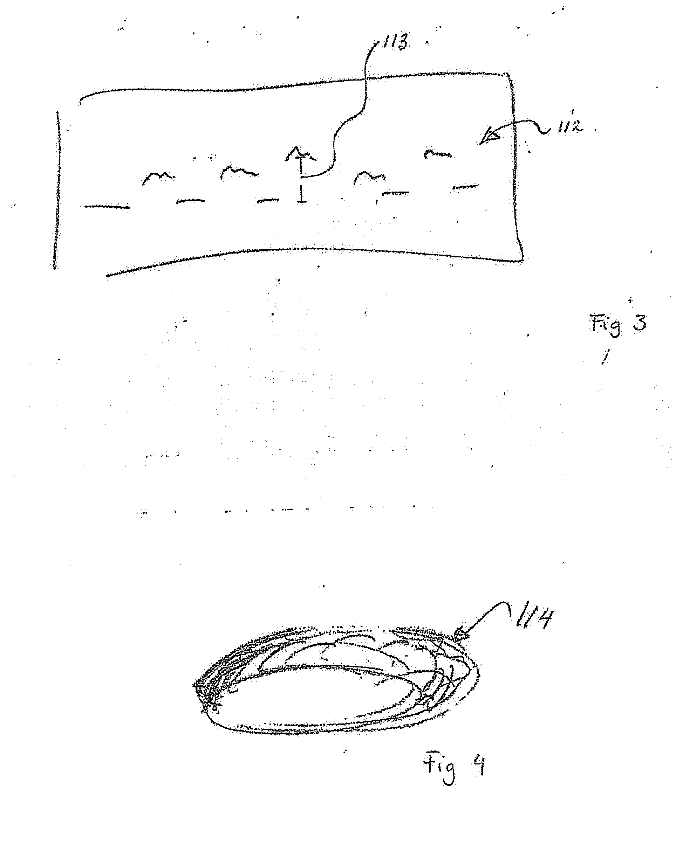

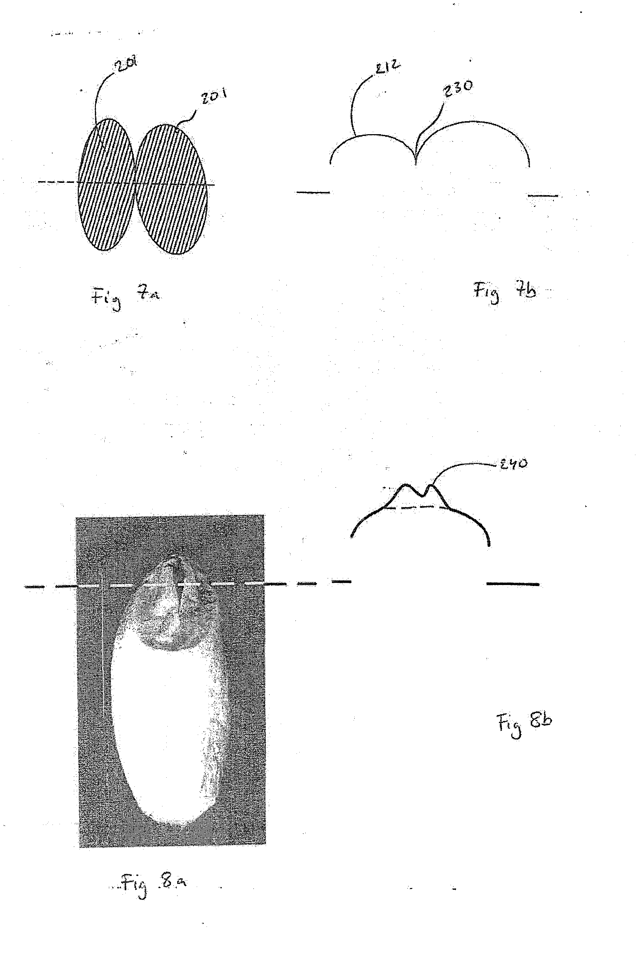

, wherein *Height* is the actual height of a measured point, $\Delta height$ is the pixel distance in the image between a laser point on the feeder 102 and the measured point, and res is the resolution in the image. Fig. 3 shows an image as detected by the camera 108. This image may thus be used by the analyzer 111 to calculate the cross-sectional height profile 112 of a grain sample using equation (1) above. The height profile 112 in Fig. 3 illustrates a contour of a plurality of grains being slightly separated. The straight lines interspacing the curved lines indicate a reference plane, such as the feeder 102 of the grains. The distance 113 between the reflected light from a point on a grain and the reference plane constitutes the term $\Delta height$ to be introduced in equation (1). The analyzer 111 is further arranged to determine a three-dimensional surface 114, as shown in Fig. 4, of the one or more grains based on a plurality of determined height profiles being obtained as the grains are fed past the place 104 for optical measurement and successive images are being acquired by the camera 108.

The analyzer 111 then determines a quality of the at least one grain based on the determined three-dimensional surface 114. The analyzer 111 may be arranged to calculate the volume of each grain. The volume of each individual grain may be used for sorting the particles by size. The volume may also be used for obtaining a relative volume of specific grades of the grains, wherein the grades are determined using the measurement of the three-dimensional surface or any other further measurement being performed on the grains, such as analysis of a two-dimensional colour image of the grains. The relative volume may thus give a measure on the volume of a specific grade in relation to the total volume of the particle sample. The analyzer 111 may further be arranged to identify undesired particles, such as gravel or dirt, which have shapes that differ substantially from the normal shape of the grains.

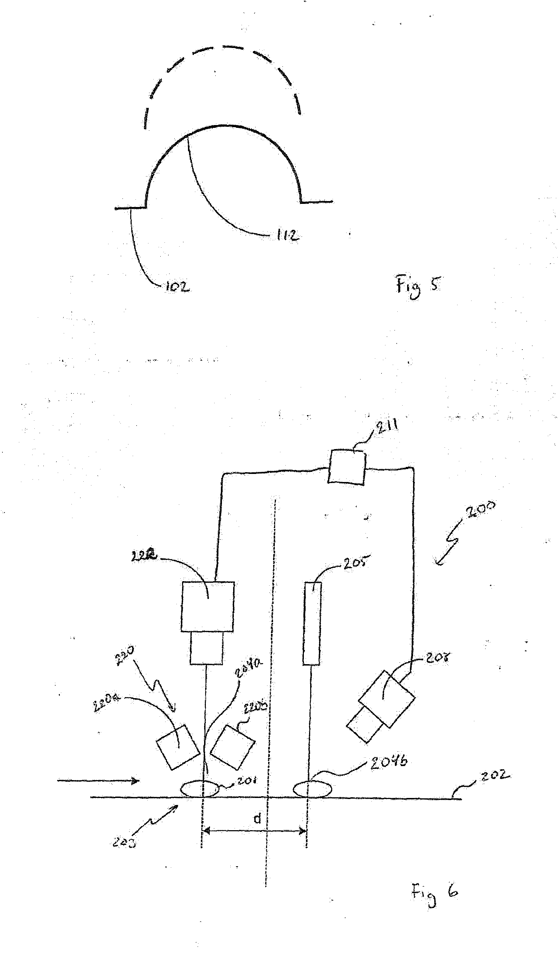

The analyzer 111 may also be arranged to identify defects in the grains, such as cracked, split, broken or cleaved grains . These defects may be identified using the determined three-dimensional surface-and comparing to a "normal" or desired shape of the grain. For example, halved grains, which may otherwise be hard to detect, may now easily be identified using the determined three-dimensional surface 114, as illustrated in Fig.5. The halved grains often position themselves with the broken part abutting the feeder 102. A two-dimensional image would not be able to detect that the grain is halved and would image an unaffected part of the grain. However, as shown in Fig. 5, the three-dimensional image information presents a height profile 112 that is significantly lower than the height profile of an unbroken grain. The detected height profile 112 is shown in Fig. 5 in solid line, whereas the height profile of an unbroken grain is shown in dashed line. Thus, the three-dimensional image information may be used to easily detect the halved grain. Such, halved grains may frequently occur when analyzing soya beans or peas. Further, the analyzer 111 may be arranged to detect certain weather damages to the grains. For example, the three-dimensional surface 114 may be used to identify frost damages, where the grain is thinner and the surface is rougher. Also, the analyzer 111 may be arranged to identify skin remainders on skinned grains. Moreover, sprouted grains having abnormal shapes may be detected. Further, some mould and fungi diseases maybe identified by the analyzer 111, since the grains having such defects have a rougher surface.

The analyzer 111 may comprise one or more units for performing the tasks of determining height profiles, three-dimensional surfaces and the quality.

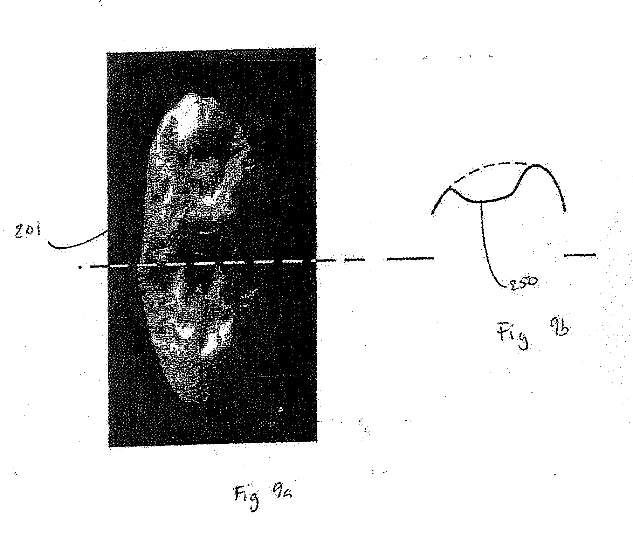

Referring now to Fig. 6, a device 200 according to a second embodiment, which is arranged to combine two-dimensional and three-dimensional image information for analysis of particles, will be described. The device 200 comprises a feeder 202, similar to the feeder 102 according to the first embodiment. The feeder 202 is arranged to feed a particle sample 203, comprising at least one grain 201, to a first place 204a for optical measurement and further to a second place 204b for optical measurement. The set-up at the first place 204a for optical measurement is arranged for obtaining a two-dimensional top view of the particle sample 203. The set-up at the second place,204b for optical measurement is arranged for obtaining three-dimensional image information, as described above with reference to Figs 1-4. The device 200 may thus, at the second place 204b for optical measurement, comprise a laser light source 205 and a detector 208 arranged at an angle $\alpha$ in relation to the feeder 202, in order to determine a height profile 212 of grains 201 passing the second place. 204b for optical measurement. The first and second places 204a, 204b for optical measurement are spaced apart with a known distance d, whereby measurements from the different set-ups may easily be combined knowing the speed of transport of particle samples 202 between the set-ups. The feeder 202 may alternatively be arranged to feed the particle sample 203 in opposite order to the places 204a, 204b for optical measurement.

The device 200 may, at the first place 204a for optical mea,surement, comprise a light source 220 for illuminating the particle sample 203. The light source 220 may be an incandescent lamp, a light-emitting diode or any other kind of irradiation, source that lights up the particle sample 203 to improve imaging conditions. The light source 220 preferably comprises two units 220a and 220b for illuminating the particle sample 203 from different angles, whereby a uniform illumination of the particle sample 203 may be achieved. The device 20Q may, at the first place 204a for optical measurement, further comprise a camera 222 that images a top view of the particle sample 203. The camera 222 may be a..line-camera enabling scanning of the particle samples 203 using a continuous speed on the feeder 202. Alternatively, the camera 22:2 may be any kind of digital camera obtaining a two-dimensional image of the particle sample 203.

The image information from the first and second set-ups may be combined in an analyzer 2,11 in order to determine a quality of the particle sample. Thus, the information from both measurements may be used, for improving the analysis.

The two-dimensional image may typically be used to classify the grains 201 into different grades based on colour and shape of the grains 201 as viewed in the two-dimensional image. The three-dimensional image information may then be used as a supplement for identifying certain defects or abnormal shapes of the grains 201 in order to thus improve the analysis performed by the two-dimensional imaging.

Referring now to Figs 7-9, situations where the measurements may be advantageously combined for improving analysis will be described. In Fig. 7a, two grains 201 are shown lying in contact with each other, as viewed in a two-dimensional image. Using this two-dimensional image to segment the grains 201 may be difficult. However, when combining the two-dimensional image with three-dimensional image information, segmenting of the grains 201 may easily be achieved. As illustrated in Fig. 7b, the three-dimensional image information will show an indentation 230 in the height profile 212, which indicates that the height profile 212 is derived from two grains 2C12. Thus, the three-dimensional image information may be used to confirm that the two-dimensional image should be segmented into two parts representing two grains 201.

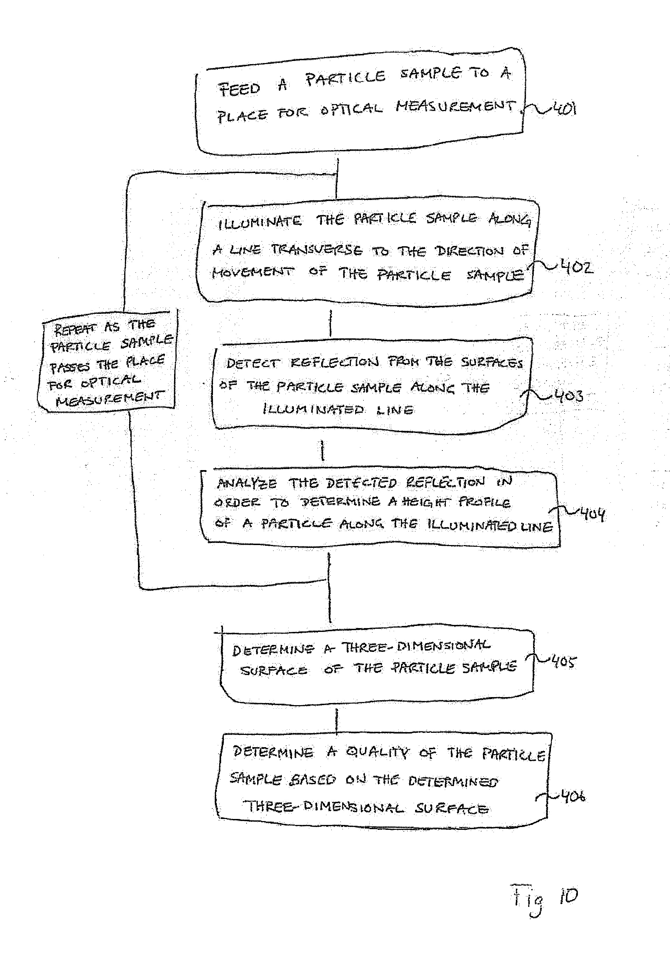

Referring to Figs 8 and 9, it is illustrated how the three-dimensional information may be used to detect irregularities in a grain 201 that may be hard to detect in the two-dimensional image. In Fig. 8a, a two-dimensional image of a sprouted grain 201 is shown. The sprout is hard to detect in the two-dimensional image. However, using the three-dimensional image information, an irregular bulge 240 in the grain 201 may be detected, as, illustrated in Fig. 8b. The irregular bulge 240 is shown in solid line and clearly differs from the height profile of a normal grain illustrated in dashed line. Thus, the sprouted grain 201 may be detected and correctly classified.

In Fig. 9a, a two-dimensional image of a distorted grain 201 is shown. The distortion is very hard to detect in the two-dimensional image. However, the three-dimensional image data, shown in Fig. 9b, illustrates an abnormal indentation 250 in the three-dimensional surface of the grain 201. The indentation 250 is illustrated in solid line and clearly differs from a normal grain surface as illustrated in dashed line . Thus, the three-dimensional image information may be used to easily detect such a distortion.

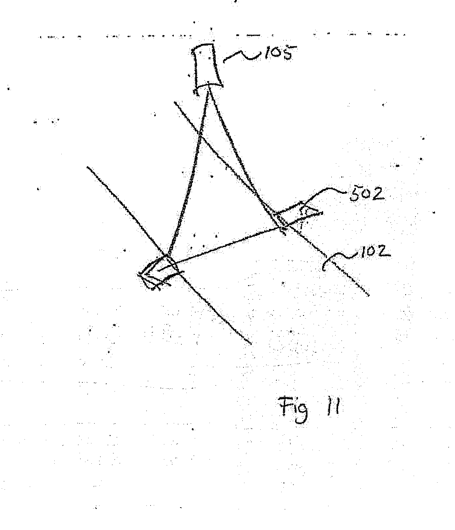

Referring now to Fig. 10, a method fo.r:optic.al .measuring of particles will be described. A particle sample is provided to the feeder of the device for optical measurement. The feeder feeds, step 401, the particle sample to a place for optical measurement where a light source illuminates, step 402, the particle sample along a line transverse to the direction of movement of the particle sample when the particle sample passes the place for optical measurement. A detector detects, step 403, reflection from the surfaces of the particle sample along the illuminated line and an analyzer analyzes, step 404, the detected reflection in order to determine a height profile of at lease one particle of the sample along the illuminated line. The steps of illuminating 402, detecting 403 and analyzing 404 are repeated as the particle sample passes the place for optical measurement in order to determine, step 405, a three-dimensional surface of the particle sample. The analyzer then determines, step 406, a quality of the particle sample based on the determined three-dimensional, surface.

From a user's perspective, the process of measurement can be described followingly. A user of the device inserts a sample into a hopper in connection with the device for optical measurement. The user inputs required sample, information and selects the quality factor that are to be measured. The analysis is initiated and when the device has carried out the steps previously mentioned the results are displayed to the user and/or stored in a memory. Subsequently, the sample, is removed, i.e. with a sample collection cup, or automatically by the device.

Calibration of the device is advantageously carried out by arranging reference plates 502 on the sides of the feeder 102 where the projected beam of light crosses the feeder 102 transversely, as illustrated in Fig. 11. When the plane of the feeder 102 is in alignment with the reference plates 502, the height profile 112 as determined by the detector 108 and analyzer 111 will constitute a straight line, providing a simple, and precise process for alignment.

It should be emphasized that the preferred embodiments described herein are in no way limiting and that many alternative embodiments are possible within the scope of protection defined by the appended claims. For example, a second camera may be arranged to view the illuminated line. The second camera may be arranged at a position opposite to the light source from the first camera. Thus, the first and second camera together will be able to view the entire height profile of the particles. Using only one camera, some parts of the particle may be obscured. Thus, using two cameras a more accurate three-dimensional surface may be obtained.

Also, according to another alternative, the three-dimensional image information of a particle may be obtained by means of two or more digital cameras being arranged to view a particle from different angles, while the entire particle is illuminated. Images of the particle obtained by the two or more digital cameras may then be used in order to determine a three-dimensional shape of the particle.

## Claims

1. A device (100) for optical measuring of small particles (101), such as grains from crops, for analysis of the quality of said particles (101), comprising:

   - a feeder (102), which is arranged to feed a particle sample (103), which comprises at least one particle, (101), to a place (104) for optical measurement,
   - an optical system (105; 108), which is adapted to illuminate said particle sample (103) at said place (104) for optical measurement and to detect illumination after its interaction with said particle sample, and
   - an analyzer (111), which is adapted to receive said detected illumination and to process the same to determine a quality of said particle sample,

   **characterised in that** the analyzer (111) is adapted to process the detected illumination to generate three-dimensional image information of individual particles (101) of the particle sample (103) and to process said three-dimensional image information to determine a quality of said particle sample (103).

2. The device as described in claim 1, wherein said analyzer (111) is adapted to determine a quality that comprises a volume measurement for at least one particle (101) of said particle sample (103).

3. The device as described in claim 1 or 2, wherein said analyzer (111) is adapted to determine a quality that comprises identification of a defect in said particle and/or said sample.

4. The device as described in claim 3, wherein said defect comprises a cracked, split, or irregularly shaped grain, weather damage, skin remainders, sprouted kernels, mould and/or fungi diseases, rougher surface or any combinations thereof.

5. The device as described in any one of the preceding claims, wherein said analyzer (111) is adapted to determine a quality that comprises classification of said particle sample (103).

6. The device as described in any one of the preceding claims, wherein the analyzer (111) is adapted to process the detected illumination to generate three-dimensional surface information as said three-dimensional image information.

7. The device as described in claim 6, wherein the optical system (105; 108) comprises

- a light source, which is arranged to illuminate said particle sample (103) along a line (106) transverse to a direction of movement (107) of said particle sample (103); and
- a detector (108), which is arranged to detect illumination reflected from surfaces of said particle sample (103) along said line (106); and wherein

the analyzer (111) is adapted to analyze said detected reflected illumination to determine a height profile (112) of at least one particle (101) of said particle sample (103) along said line (106) and to generate said three-dimensional surface information based on a plurality of determined height profiles (112) as said particle sample (103) is transported in 5aid dire:ction of movement (107).

8. The device as described in claim 7, wherein said detector (108) comprises an image-acquiring means which is arranged at a non-perpendicular angle to a plane on which the sample (103) is fed.

9. The device as described in claim 8, wherein said analyzer (111) is adapted to determine a height profile (112) by comparing distances (113) between said surface of said particles with said plane.

10. The device as described in any one of claim 7-9, wherein said light source (105) comprises a laser light source.

11. The device as described in claim 10 wherein said laser light source is arranged to emit light in a plane.

12. The device as described in any one of the claim 7-11, wherein said detector (108) comprises two or more units, which are arranged to detect reflected light from at least partially different regions of said sample.

13. The device as described in any one of the preceding claims, wherein said feeder comprises a conveyor (102).

14. The device as described in any one of the preceding claims, wherein said feeder (102) comprises an inclined surface such that a sample is fed to said place (104) for optical measurement under the influence of the gravity field.

15. The device as described in any one of the preceding claims, further comprising a detector (222) for obtaining a two-dimensional plan view of the particle sample (103), wherein the analyzer (111) is adapted to process the two-dimensional plan view and the three-dimensional image information to determine a quality of said particle sample (103).

16. The device as described in any one of the preceding claims, wherein the device (100) is arranged to determine a quality to be used as a basis for pricing of crops.

17. The device as described in any one of the preceding claims, wherein the device (100) is arranged to select particles of similar outer measures.

18. A method for optical measuring of small particles, such as grain from crops, for analysis of the quality of said particles, comprising the steps of

- feeding (401) a particle sample, which comprises at least one particle, to a place for optical measurement,
- illuminating (402) said particle sample at said place for optical measurement,
- detecting illumination (403) after its interaction with said particle sample,
- analyzing (404) said detected illumination to determine a quality of said particle sample,

**characterised in that** said step of analyzing comprises processing the detected illumination to generate three-dimensional image information of individual particles of the particle sample, and

- processing said three-dimensional image information to determine (406) a quality of said particle sample.

19. The method as described in claim 18, wherein said step of processing the detected illumination generates three-dimensional surface information as said three-dimensional image information.

20. The method as described in claim 19, wherein said step of illuminating comprises illuminating said particle sample (103) along a line (106) transverse to a direction of movement (107) of said particle sample (103);
said step of detecting comprises, detecting illumination reflected from surfaces of said particle sample. (103) along said line (106); and
said step of analyzing comprises analyzing said detected reflected illumination to determine a height profile (112) of at least one particle (101) of said particle sample (103) along said line (106) and to generate said three-dimensional surface information based on a plurality of determined height profiles (112) as said particle sample (103) is transported in said direction of movement (107).

Fig 1

Fig 2

Fig 3

Fig 4

Fig 7a

Fig 7b

201

201

212

230

240

Fig 8a

Fig 8b

Fig 5

112

102

211

200

122

205

208

230

204a

204b

220a

204b

201

202

d

203

Fig 6

201

Fig 9a

250

Fig 9b

FEED A PARTICLE SAMPLE TO A PLACE FOR OPTICAL MEASUREMENT ~401

ILLUMINATE THE PARTICLE SAMPLE ALONG A LINE TRANSVERSE TO THE DIRECTION OF MOVEMENT OF THE PARTICLE SAMPLE ~402

REPEAT AS THE PARTICLE SAMPLE PASSES THE PLACE FOR OPTICAL MEASUREMENT

DETECT REFLECTION FROM THE SURFACES OF THE PARTICLE SAMPLE ALONG THE ILLUMINATED LINE ~403

ANALYZE THE DETECTED REFLECTION IN ORDER TO DETERMINE A HEIGHT PROFILE OF A PARTICLE ALONG THE ILLUMINATED LINE ~404

DETERMINE A THREE-DIMENSIONAL SURFACE OF THE PARTICLE SAMPLE ~405

DETERMINE A QUALITY OF THE PARTICLE SAMPLE BASED ON THE DETERMINED THREE-DIMENSIONAL SURFACE ~406

Fig 10

105

502

102

Fig 11

**European Patent Office**     EUROPEAN SEARCH REPORT

Application Number

EP 06 11 0604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 177 682 B1 (BARTULOVIC VUK ET AL) 23 January 2001 (2001-01-23) * claims 15-23; figures 4,7 * | 1-20 | INV. G01N21/85 G01B11/24 G01B11/04 B07C5/342 |
| X | US 6 369 401 B1 (LEE DAH-JYE) 9 April 2002 (2002-04-09) * column 4, line 15 - column 7, line 45; figures 1A-4 * | 1-20 | |
| X | EP 1 170 572 A (THERMO RADIOMETRIE OY) 9 January 2002 (2002-01-09) * paragraphs [0007] - [0010]; figures 4,5 * | 1-20 | |
| A | US 5 917 927 A (SATAKE ET AL) 29 June 1999 (1999-06-29) * the whole document * | 1-20 | |
| A | WO 2004/046645 A (SOLVISION; CANTIN, MICHEL; NIKITINE, ALEXANDRE; QUIRION, BENOIT) 3 June 2004 (2004-06-03) * page 8, line 19 - page 10, line 18; figures 2-4 * | 1-20 | TECHNICAL FIELDS SEARCHED (IPC) G01N G01B B07C |
| A | EP 1 469 301 A (S.A.M.M.O. S.P.A) 20 October 2004 (2004-10-20) * paragraphs [0029], [0030] * | 17 | |
| A | WO 01/01071 A (MATERIEL POUR L'ARBORICULTURE FRUITIERE; BLANC, PHILIPPE) 4 January 2001 (2001-01-04) * figures 1-3 * | 1-20 | |
| A | WO 98/14046 A (D.J. VAN DER HAVE B.V; OGGEL, JACOBUS, MARINUS) 9 April 1998 (1998-04-09) * figure 3 * | 1-20 | |

The present search report has been drawn up for all claims

| Place of search | Date of completion of the search | Examiner |
|---|---|---|
| Munich | 23 May 2006 | Consalvo, D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 06 11 0604

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2006

| Patent document cited in search report | | | Publication date | Patent family member(s) | | Publication date |
|---|---|---|---|---|---|---|
| US 6177682 | B1 | | 23-01-2001 | NONE | | |
| US 6369401 | B1 | | 09-04-2002 | NONE | | |
| EP 1170572 | A | | 09-01-2002 | FI 20001568 A | | 31-12-2001 |
| | | | | JP 2002071328 A | | 08-03-2002 |
| | | | | US 2002039187 A1 | | 04-04-2002 |
| US 5917927 | A | | 29-06-1999 | NONE | | |
| WO 2004046645 | A | | 03-06-2004 | AU 2003287803 A1 | | 15-06-2004 |
| EP 1469301 | A | | 20-10-2004 | NONE | | |
| WO 0101071 | A | | 04-01-2001 | AT 291216 T | | 15-04-2005 |
| | | | | AU 771418 B2 | | 18-03-2004 |
| | | | | AU 5230200 A | | 31-01-2001 |
| | | | | BR 0011788 A | | 26-03-2002 |
| | | | | CA 2377307 A1 | | 04-01-2001 |
| | | | | CN 1371466 A | | 25-09-2002 |
| | | | | DE 60018747 D1 | | 21-04-2005 |
| | | | | EP 1190210 A1 | | 27-03-2002 |
| | | | | ES 2239599 T3 | | 01-10-2005 |
| | | | | FR 2795499 A1 | | 29-12-2000 |
| | | | | IL 147055 A | | 31-08-2005 |
| | | | | JP 2003503686 T | | 28-01-2003 |
| | | | | MX PA01013041 A | | 20-08-2003 |
| | | | | NZ 516166 A | | 25-07-2003 |
| | | | | RU 2243502 C2 | | 27-12-2004 |
| | | | | US 6888082 B1 | | 03-05-2005 |
| | | | | ZA 200110223 A | | 12-03-2003 |
| WO 9814046 | A | | 09-04-1998 | AU 4473997 A | | 24-04-1998 |
| | | | | NL 1004209 C2 | | 07-04-1998 |

For more details about this annex : see Official Journal of the European Patent Office, No. 12/82

**EP 1 830 176 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20050074146 A